(19)  Europäisches Patentamt

European Patent Office

Office européen des brevets

(11) **EP 4 685 820 A1**

(12) **EUROPEAN PATENT APPLICATION**
published in accordance with Art. 153(4) EPC

(43) Date of publication:
28.01.2026 Bulletin 2026/05

(21) Application number: 24774849.4

(22) Date of filing: 15.03.2024

(51) International Patent Classification (IPC):
$H01B\ 13/00^{(2006.01)}$  $C01B\ 25/14^{(2006.01)}$
$H01B\ 1/06^{(2006.01)}$  $H01B\ 1/10^{(2006.01)}$
$H01M\ 10/052^{(2010.01)}$  $H01M\ 10/0562^{(2010.01)}$

(52) Cooperative Patent Classification (CPC):
C01B 25/14; H01B 1/06; H01B 1/10; H01B 13/00;
H01M 10/052; H01M 10/0562; Y02E 60/10

(86) International application number:
PCT/JP2024/010180

(87) International publication number:
WO 2024/195713 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2023 JP 2023045332

(71) Applicant: MITSUBISHI GAS CHEMICAL
COMPANY, INC.
Chiyoda-ku
Tokyo 100-8324 (JP)

(72) Inventor: KONYA Masashi
Niigata-shi, Niigata 950-3112 (JP)

(74) Representative: Vossius & Partner
Patentanwälte Rechtsanwälte mbB
Siebertstraße 3
81675 München (DE)

(54) **METHOD FOR PRODUCING SN-CONTAINING SULFIDE SOLID ELECTROLYTE AND SN-CONTAINING SULFIDE SOLID ELECTROLYTE**

(57) According to one embodiment, there is provided a method for producing a Sn-containing sulfide solid electrolyte, the method comprising: preparing a raw material mixture containing a Li element, a Sn element, a P element and a S element; and subjecting the raw material mixture to a mechanical milling treatment to obtain a Sn-containing sulfide solid electrolyte, wherein a heat treatment is not carried out after the mechanical milling treatment.

[Figure 1]

EP 4 685 820 A1

**Description**

Technical Field

The present invention relates to a method for producing a Sn-containing sulfide solid electrolyte, and a novel Sn-containing sulfide solid electrolyte.

Background Art

In recent years, the demand for lithium-ion secondary batteries has been increasing in intended uses such as mobile information terminals, mobile electronic devices, electric vehicles, hybrid electric vehicles, and further, stationary power storage systems. However, current lithium-ion secondary batteries use flammable organic solvents as electrolytes, and thus, require a strong exterior to prevent the organic solvents from leaking. In addition, restrictions on the structure of devices have been imposed, such that portable personal computers, etc. are required to have structures that are against the risk of electrolyte leakage.

Moreover, the intended uses of lithium-ion secondary batteries have expanded to moving objects such as automobiles and airplanes, and stationary lithium-ion secondary batteries are required to have large volumes. Under such circumstances, there is a tendency to place more importance on safety than ever before, and efforts are being made to develop all-solid-state lithium-ion secondary batteries that do not use harmful substances such as organic solvents.

As solid electrolytes for all-solid-state lithium-ion secondary batteries, for example, the use of oxides, phosphate compounds, organic polymers, sulfides, etc. is being considered.

Among these solid electrolytes, sulfides have the characteristics of having high ionic conductivity and being relatively soft, thereby making it easy to form an interface between a solid and a solid. Furthermore, such sulfides are stable with respect to active materials, and their development as practical solid electrolytes is progressing.

Among sulfide-based solid electrolytes, since sulfide-based solid electrolytes containing Sn have good ionic conductivity and water resistance and are further low-cost, there are high expectations for their practical use (Non Patent Literature 1). An example of such a sulfide-based solid electrolyte containing Sn may be $Li_4SnS_4$, which has an advantage of high water resistance. On the other hand, the ionic conductivity of $Li_4SnS_4$ is on the order of $10^{-5}$ to $10^{-4}$ S/cm, and the low ionic conductivity thereof has been problematic. In addition, it has been reported that the ionic conductivity is improved by replacing some Sn elements in the $Li_4SnS_4$ skeleton with other elements (Sb, As, etc.) (Non Patent Literatures 2 and 3). However, even in such a case, the ionic conductivity remains on the order of $10^{-4}$ S/cm.

Furthermore, it has also been reported that a solid electrolyte (glass ceramics) having a high ionic conductivity can be obtained by adding a P component to raw materials containing Sn, then subjecting the obtained mixture to mechanical milling to make it amorphous (vitrified), and then performing a heat treatment on the resultant (Patent Literature 1 and Non Patent Literature 4). However, the heat treatment step is costly because it uses a large amount of energy. In addition, in the case of sulfide-based solid electrolytes, they are also problematic in that impurities are generated due to volatilization of sulfur during the heat treatment, and in that a solid electrolyte having a desired composition cannot be obtained.

Citation List

Patent Literature

Patent Literature 1: JP Patent Publication (Kokai) No. 2022-139139 A

Non Patent Literature

Non Patent Literature 1: Journal of Power Sources 396, 2018, pp. 824-830

Non Patent Literature 2: Journal of Energy Chemistry 41, 2020, pp. 171-176

Non Patent Literature 3: Energy Environ. Sci., 2014, 7, pp. 1053-1058

Non Patent Literature 4: Ceramics International, 47, 2021, pp. 28377-28383

Summary of Invention

Technical Problem

Under the above-described circumstances, it has been desired to improve a method for producing a Sn-containing sulfide solid electrolyte.

Solution to Problem

The present inventor has conducted intensive studies directed towards achieving the aforementioned object regarding a sulfide-based solid electrolyte. As a result, the present inventor has discovered a method for producing a Sn-containing sulfide solid electrolyte, in which a raw material mixture is subjected to a mechanical milling treatment, and after the mechanical milling treatment, a heat treatment is not carried out.
The present invention is, for example, as follows.

[1] A method for producing a Sn-containing sulfide solid electrolyte, the method comprising:

preparing a raw material mixture containing a Li element, a Sn element, a P element and a S element; and
subjecting the raw material mixture to a mechanical milling treatment to obtain a Sn-containing sulfide solid electrolyte, wherein
a heat treatment is not carried out after the mechanical milling treatment.

[1-1] The method according to the above [1], wherein the mixing ratio of the Li element, the Sn element, the P element and the S element in the raw material mixture satisfies the composition of $Li_uSn_vP_2S_y$ ($6 \leq u \leq 14$; $0.8 \leq v \leq 2.1$; and $9 \leq y \leq 16$).
[2] The method according to the above [1] or [1-1], wherein the Sn-containing sulfide solid electrolyte has a lithium ion conductivity of $8.0 \times 10^{-4}$ S/cm or more.
[3] The method according to any one of the above [1] to [2], wherein the Sn-containing sulfide solid electrolyte has a crystal phase with an orthorhombic structure.
[4] The method according to any one of the above [1] to [3], wherein the Sn-containing sulfide solid electrolyte has diffraction peaks at, at least, $2\theta = 14.08°\pm0.50°$, $17.10°\pm0.50°$, $17.89°\pm0.50°$, $19.83°\pm0.50°$, $25.66°\pm0.50°$, $26.58°\pm0.50°$ and $29.07°\pm0.50°$ in X-ray diffraction (CuK$\alpha$: $\lambda = 1.5405$Å).
[5] The method according to any one of the above [1] to [4], wherein the Sn-containing sulfide solid electrolyte has peaks at, at least, $415\pm10$ cm$^{-1}$ and $340\pm10$ cm$^{-1}$ in Raman spectroscopy.
[6] The production method according to any one of the above [1] to [5], wherein the Sn-containing sulfide solid electrolyte contains, as a main constituent, a crystal structure having an octahedron O composed of a Li element and a S element, a tetrahedron $T_1$ composed of one or more elements selected from the group consisting of P and Sn and a S element, and a tetrahedron $T_2$ composed of a P element and a S element, wherein the tetrahedron $T_1$ and the octahedron O share a ridge, and the tetrahedron $T_2$ and the octahedron O share a vertex.
[7] The method according to any one of the above [1] to [6], wherein the mechanical milling is dry mechanical milling.
[8] The method according to any one of the above [1] to [6], wherein the mechanical milling is wet mechanical milling.
[9] The method according to the above [8], wherein the wet mechanical milling is carried out in the presence of a hydrocarbon solvent.
[10] The method according to the above [9], wherein the hydrocarbon solvent is selected from the group consisting of heptane, hexane, toluene and xylene.
[11] The method according to any one of the above [1] to [10], wherein

the mechanical milling treatment is carried out under the condition of a gravity value of 27.5 G or more, using a planetary ball mill, and
the gravity value is calculated according to the following equation:

gravity value (G) = $1118 \times$ revolution radius (m) $\times$ rotation speed (rpm)$^2 \times 10^{-6}$.

[11-2] The method according to any one of the above [1] to [11], wherein the mechanical milling treatment is carried out at a rotation speed of 100 to 1200 rpm for 0.1 to 300 hours.
[12] A Sn-containing sulfide solid electrolyte, which contains a Li element, a Sn element, a P element and a S element, has a crystal phase with an orthorhombic structure, and has peaks at, at least, $2\theta = 14.08°\pm0.50°$, $17.10°\pm0.50°$, $17.89°\pm0.50°$, $19.83°\pm0.50°$, $25.66°\pm0.50°$, $26.58°\pm0.50°$ and $29.07°\pm0.50°$ in X-ray diffraction (CuK$\alpha$: $\lambda = 1.5405$Å).

[13] The Sn-containing sulfide solid electrolyte according to the above [12], which has a peak half value width of 0.80 to 1.70° at $2\theta = 19.83° \pm 0.50°$ and a peak half value width of 0.70 to 1.40° at $2\theta = 29.07° \pm 0.50°$ in X-ray diffraction (CuK$\alpha$: $\lambda$ = 1.5405 Å).

[14] The Sn-containing sulfide solid electrolyte according to the above [12] or [13], which has a lithium ion conductivity of $8.0 \times 10^{-4}$ S/cm or more.

[15] The Sn-containing sulfide solid electrolyte according to any one of the above [12] to [14], which has peaks at, at least, $415 \pm 10$ cm$^{-1}$ and $340 \pm 10$ cm$^{-1}$ in Raman spectroscopy.

[16] The Sn-containing sulfide solid electrolyte according to any one of the above [12] to [15], which contains, as a main constituent, a crystal structure having an octahedron O composed of a Li element and a S element, a tetrahedron $T_1$ composed of one or more elements selected from the group consisting of P and Sn and a S element, and a tetrahedron $T_2$ composed of a P element and a S element, wherein the tetrahedron $T_1$ and the octahedron O share a ridge, and the tetrahedron $T_2$ and the octahedron O share a vertex.

[17] An all-solid-state battery, comprising the Sn-containing sulfide solid electrolyte according to any one of the above [12 to [16].

Advantageous Effects of Invention

According to the present invention, a method for producing a Sn-containing sulfide solid electrolyte without needing a heat treatment after a mechanical milling treatment can be provided.

Brief Description of Drawings

[Figure 1] Figure 1 is a schematic view showing the crystal structure of the Sn-containing sulfide solid electrolyte according to one embodiment of the present invention.

[Figure 2] Figure 2 is a schematic cross-sectional view of the all-solid-state battery according to one embodiment of the present invention.

[Figure 3] Figure 3 is a view showing the X-ray diffraction measurement results of the crystals obtained in the examples and the reference example.

[Figure 4] Figure 4 is view showing the Raman spectroscopy results of the crystals obtained in the examples and the reference example.

Description of Embodiments

Hereinafter, the embodiments of the present invention will be described. It is to be noted that the materials, configurations, etc. described below are not intended to limit the present invention, and they can be modified in various ways within the scope of the gist of the present invention.

The method for producing a Sn-containing sulfide solid electrolyte according to one embodiment of the present invention comprises: preparing a raw material mixture containing a Li element, a Sn element, a P element and a S element; and subjecting the raw material mixture to a mechanical milling treatment to obtain a Sn-containing sulfide solid electrolyte, wherein the method is characterized in that a heat treatment is not carried out after the mechanical milling treatment. Conventionally, as a method for producing a sulfide-based solid electrolyte, a method comprising mixing multiple raw materials to make them into a glassy state or a crystalline state, then subjecting the thus obtained mixture to a heat treatment to cause a phase transition (i.e. a phase transition from glass to glass ceramics, or a phase transition from crystal to crystal), so as to obtain a high ionic conductor, has been commonly used. However, as mentioned above, this method has been problematic in that a large amount of energy is used in the heat treatment step, which is costly, and in that impurities are generated due to volatilization of sulfur during the heat treatment, making it impossible to obtain a solid electrolyte having a desired composition. In addition, the heat treatment step (firing) in production of the sulfide-based solid electrolyte needs be performed under conditions that are not exposed to the air, and therefore, special equipment is required for this purpose.

Furthermore, grain growth and sintering of the solid electrolyte during the heat treatment step are also problematic. In order to achieve the objects of achieving the high energy density and high power output of all-solid-state batteries, it is necessary to reduce the interfacial resistance between the solid electrolyte layer and the electrode layer. In order to achieve such a reduction in the resistance, it has been proposed to reduce the particle diameter of the solid electrolyte (for example, JP Patent Publication (Kokai) No. 2008-00459 A). However, even in a case where a material with a small particle diameter is obtained at the stage before the heat treatment, the grain growth and sintering may progress by the heat treatment at a high temperature, which may result in a problem of the particle diameter becoming large.

As described above, in the background in which an improvement in the method for producing a Sn-containing sulfide solid electrolyte has been demanded, the present inventors have conducted intensive studies, and as a result, the present inventors have discovered a method for producing a Sn-containing sulfide solid electrolyte without needing a heat treatment after a mechanical milling treatment. As a result of not performing the heat treatment, the above-mentioned problems regarding costs, impurity generation, etc. do not occur. In addition, since problems regarding grain growth and sintering due to the heating step do not occur, either, it is possible to produce a solid electrolyte with a smaller particle diameter (the achievement of high energy density and high power output), and it is expected that the ionic conductivity will also be improved. Among others, the greatest advantage is that it is possible to produce a Sn-containing sulfide solid electrolyte by a simple method.

Moreover, since the Sn-containing sulfide solid electrolyte has been confirmed to have high water resistance, and also since generation of hydrogen sulfide is suppressed, the Sn-containing sulfide solid electrolyte is a highly safe material. Therefore, in the production of the Sn-containing sulfide solid electrolyte according to the embodiment of the present invention, it is not necessary to prepare a low dew point environment, and in this respect as well, it can be said that the sulfide-based solid electrolyte can be produced at low costs. Furthermore, according to the embodiment of the present invention, it is also possible to produce a sulfide-based solid electrolyte by mixing in a relatively short time.

Hereafter, the components of the present invention will be successively described.

1. Method for producing Sn-containing sulfide solid electrolyte

According to one embodiment of the present invention,

there is provided a method for producing a Sn-containing sulfide solid electrolyte, comprising:
preparing a raw material mixture containing a Li element, a Sn element, a P element and a S element (Step 1); and
subjecting the raw material mixture to a mechanical milling treatment to obtain a Sn-containing sulfide solid electrolyte (Step 2), wherein

milling treatment.

(1) Step 1

In Step 1, first, a raw material mixture containing a Li element, a Sn element, a P element and a S element is prepared. As long as a mixture containing these elements is obtained, the raw materials and the mixing method are not limited. For example, lithium sulfide ($Li_2S$, etc.), tin sulfide (SnS, $SnS_2$, etc.), phosphorus sulfide ($P_2S_3$, $P_2S_5$, $P_4S_3$, $P_4S_5$, $P_4S_7$, etc.), metallic lithium (Li), elemental phosphorus (P), metallic tin (Sn), elemental sulfur (S), etc. can be used. Of these, it is preferable to prepare the raw material mixture using $Li_2S$, $SnS_2$ and $P_2S_5$. This is because these raw materials are industrially produced and are excellent in terms of availability. Commercially available products can be used as these raw materials, and it is preferable to use commercially available products with high purity.

The raw material mixture may further contain other elements. Examples of such other elements may include a silicon (Si) element, a germanium (Ge) element, halogen elements (a fluorine (F) element, a chlorine (Cl) element, a bromine (Br) element, and an iodine (I)element), and an oxygen (O) element. These elements may be contained alone, or may also be contained in combination of two or more types. Specific examples of raw materials containing these elements may include: Si element-containing raw materials, such as silicon sulfide ($SiS_2$), silicon (Si), and silicon dioxide ($SiO_2$); Ge element-containing raw materials, such as germanium sulfide ($GeS_2$), germanium (Ge), and germanium dioxide ($GeO_2$); halogen element-containing raw materials, such as phosphorus pentachloride ($PCl_5$), phosphorus tribromide ($PBr_3$), phosphorus pentabromide ($PBr_5$), lithium bromide (LiBr), sodium bromide (NaBr), lithium iodide (LiI), sodium iodide (NaI), magnesium iodide ($MgI_2$), phosphorus pentachloride ($PCl_5$), phosphorus tribromide ($PBr_3$), and phosphorus pentabromide ($PBr_5$); and O element-containing raw materials, such as lithium oxide ($Li_2O$), lithium oxide ($Na_2O$), phosphorus pentoxide ($P_2O_5$), silicon dioxide $SiO_2$), germanium dioxide ($GeO_2$), tin(II) oxide (SnO), tin(IV) oxide ($SnO_2$), and tin(IV) oxide ($SnO_3$). These raw materials may be used alone, or may also be used in combination of two or more types.

The mixing ratio of the Li element, the Sn element, the P element and the S element in the raw material mixture is preferably the composition of $Li_uSn_vP_2S_y$ ($6 \leq u \leq 14$; $0.8 \leq v \leq 2.1$; and $9 \leq y \leq 16$).

The mixing method is not particularly limited, and it is preferable to mix the raw materials under an inert gas (e.g., argon) atmosphere. The mixing time is sufficient if the time in which the mixture becomes homogenous can be ensured. The time often depends on the scale of production, and a homogenous mixture can be obtained by performing the mixing, for example, for 0.1 to 24 hours.

**(2) Step 2**

In Step 2, the raw material mixture obtained in Step 1 is subjected to a mechanical milling treatment to obtain a Sn-containing sulfide solid electrolyte.

The mechanical milling treatment is also called mechanochemical treatment, and it is a method of grinding and mixing the raw materials, while applying mechanical energy thereto. According to this method, mechanical impact and friction are given to the raw materials to grind and mix them, so that the raw materials are allowed to intensively come into contact with one another and are finely divided, thereby causing a reaction of the raw materials. In other words, at this time, mixing, crushing, and reaction occur simultaneously. Therefore, it is possible to allow the raw materials to react more reliably, without heating them to a high temperature. By using the mechanical milling treatment, a metastable crystal structure, which cannot be obtained by a normal heat treatment, can be produced.

Specific examples of the mechanical milling treatment may include treatments using mechanical grinding devices such as a ball mill, a bead mill, a rod mill, a vibration mill, a disk mill, a hammer mill, and a jet mill.

The mechanical milling treatment may be either a wet mechanical milling treatment using a solvent, or a dry mechanical milling treatment that does not use a solvent. In the case of the wet mechanical milling, solvents commonly used in the present field can be used, and for example, a hydrocarbon solvent, a nitrile solvent, an ester solvent, an ether solvent. etc. can be used. Examples of the hydrocarbon solvent may include heptane, hexane, toluene, and xylene, and examples of the nitrile solvent may include acetonitrile, isobutyronitrile, and benzonitrile. In addition, examples of the ester solvent may include methyl acetate, ethyl acetate, propyl acetate, methyl propionate, and ethyl propionate, and examples of the ether solvent may include diethyl ether, tetrahydrofuran (THF), and 1,4-dioxane. Among these, a hydrocarbon solvent, and in particular, heptane, hexane, toluene, or xylene is preferable, and heptane is more preferable. Some solvents may react with the sulfide raw material during the mechanical milling and may cause degeneration. However, by using a solvent with low reactivity (for example, the solvents as mentioned above), degeneration of the raw materials during the wet mechanical milling can be suppressed.

By carrying out the wet mechanical milling treatment, a solid electrolyte with a small particle diameter can be obtained, compared to the dry mechanical milling treatment. As mentioned above, if a solid electrolyte with a small particle diameter is used, the interfacial resistance between the solid electrolyte layer and the electrode layer is reduced, and therefore, it can be expected that the solid electrolyte battery will have a high energy density and a high output.

When the wet mechanical milling treatment is adopted, a solvent-removing step and/or a drying step are appropriately carried out after the mechanical milling treatment. These steps can be carried out according to the methods ordinarily used in the present field, and examples of such methods may include heat drying and vacuum drying. The optimal temperature is different depending on the type of a solvent, and it is possible to shorten the solvent-removing time by applying a temperature sufficiently higher than the boiling point of the solvent. The temperature applied upon the removal of the solvent is preferably in the range of 60°C to 280°C, and more preferably 100°C to 250°C. In addition, by removing the solvent under reduced pressure, such as vacuum drying, the temperature applied upon the removal of the solvent can be lowered, and at the same time, time required for removing the solvent can be shortened. The time required for removing the solvent can also be shortened by flowing an inert gas such as nitrogen or argon that has a sufficiently low moisture content.

The conditions for the mechanical milling treatment are not particularly limited, and it is preferable to perform the treatment at a rotation speed of 100 to 1200 rpm for 0.1 to 300 hours. The rotation speed is more preferably 200 to 1000 rpm, and particularly preferably 400 to 800 rpm. The time required for the mechanical milling treatment is more preferably 1 to 100 hours, and particularly preferably 3 to 50 hours.

In particular, in the case of a mechanical milling treatment using a planetary ball mill, it is preferable to perform the treatment under conditions of a gravity value of 27.5 G or more.

It is to be noted that the gravity value is calculated by the following formula:

Gravity value (G) = $1118 \times$ revolution radius (m) $\times$ rotation speed (rpm)$^2 \times 10^{-6}$

Herein, the revolution radius means the distance from the edge of the pedestal of the planetary ball mill to the center of the fixed position of the zirconia pot.

By performing the mechanical milling treatment under the above-described gravity value conditions, a solid electrolyte with higher ionic conductivity can be obtained. The gravity value is preferably 27.5 G or more (e.g., 27.5 to 94.7 G), and more preferably 40.0 G or more (e.g., 40.0 to 94.7 G, 45.0 to 94.7 G, 48.0 to 94.7 G, etc.).

In the case of performing a mechanical milling treatment using a planetary ball mill, the bead diameter is preferably φ0.1 to 10 mm, and more preferably φ1 to 10 mm. By performing the mechanical milling treatment under such conditions, a solid electrolyte with higher ionic conductivity can be obtained. The mechanical milling treatment is preferably performed under an inert gas (e.g., argon) atmosphere.

The Sn-containing sulfide solid electrolyte obtained by the above-mentioned method can directly be used as it is, without being subjected to a heating step.

2. Sn-containing sulfide solid electrolyte

The Sn-containing sulfide solid electrolyte obtained by the above-mentioned method has a novel crystal structure. That is to say, according to one embodiment of the present invention, a Sn-containing sulfide solid electrolyte having a crystal phase with an orthorhombic structure is provided. Herein, the orthorhombic structure means that the structure obtained by stretching a regular hexahedral lattice by different factors along two of the orthogonal pairs.

Moreover, the Sn-containing sulfide solid electrolyte according to the present embodiment has diffraction peaks at, at least, $2\theta$ = 14.08°±0.50°, 17.10°±0.50°, 17.89°±0.50°, 19.83°±0.50°, 25.66°±0.50°, 26.58°±0.50° and 29.07°±0.50° in X-ray diffraction (CuK$\alpha$: $\lambda$ = 1.5405Å).Preferably, the Sn-containing sulfide solid electrolyte according to the present embodiment has diffraction peaks at, at least, $2\theta$ = 14.08°±0.40°, 17.10°±0.40°, 17.89°±0.40°, 19.83°±0.40°, 25.66°±0.40°, 26.58°±0.40° and 29.07°±0.40° in X-ray diffraction (CuK$\alpha$: $\lambda$ = 1.5405Å).More preferably, the Sn-containing sulfide solid electrolyte according to the present embodiment has diffraction peaks at, at least, $2\theta$ = 14.08°±0.30°, 17.10°±0.30°, 17.89°±0.30°, 19.83°±0.30°, 25.66°±0.30°, 26.58°±0.30° and 29.07°±0.30° in X-ray diffraction (CuK$\alpha$: $\lambda$ = 1.5405Å).

The Sn-containing sulfide solid electrolyte according to the present embodiment has a tendency that the half value width of the X-ray diffraction peak is larger than that of the LGPS-based solid electrolyte known in the present field. Herein, the half value width means the width of the diffraction peak at 1/2 the height of the diffraction peak intensity. In general, the half value width of a peak derived from a crystal tends to be relatively small, while the half value width of a peak derived from a glass tends to be relatively large.

In the Sn-containing sulfide solid electrolyte according to the present embodiment, the peak half value width at $2\theta$ = 19.83° ± 0.50° is preferably 0.80 to 1.70°, more preferably 0.85 to 1.65°, and particularly preferably 0.90 to 1.60° or 1.00 to 1.55°, in the X-ray diffraction measurement results (CuK$\alpha$: $\lambda$ = 1.5405 Å).Also, the peak half value width at $2\theta$ = 29.07° ± 0.50° is preferably 0.70 to 1.40°, more preferably 0.75 to 1.35°, and particularly preferably 0.80 to 1.30° or 0.90 to 1.20°. The half value width is calculated by fitting the diffraction peak data obtained by the X-ray diffraction measurement using the crystal structure analysis software SmartLab studio II, and then processing the data.

Thus, it is assumed that the Sn-containing sulfide solid electrolyte according to the present embodiment has a crystal structure that is different from that of the LGPS-based solid electrolyte already known in the present field, as a result of not undergoing a heating step. Since the Sn-containing sulfide solid electrolyte having the above-described crystal structure has low crystallinity, it has an advantage in that it has excellent moldability when it is used to produce an electrode layer or a solid electrolyte layer.

Moreover, the Sn-containing sulfide solid electrolyte according to the present embodiment preferably has peaks, at least, at $415\pm10$ cm$^{-1}$ and $340\pm10$ cm$^{-1}$ in Raman spectroscopy. These peaks indicate that the present Sn-containing sulfide solid electrolyte has a PS4$^{3-}$ skeleton and a SnS4$^{4-}$ skeleton in the crystal structure thereof.

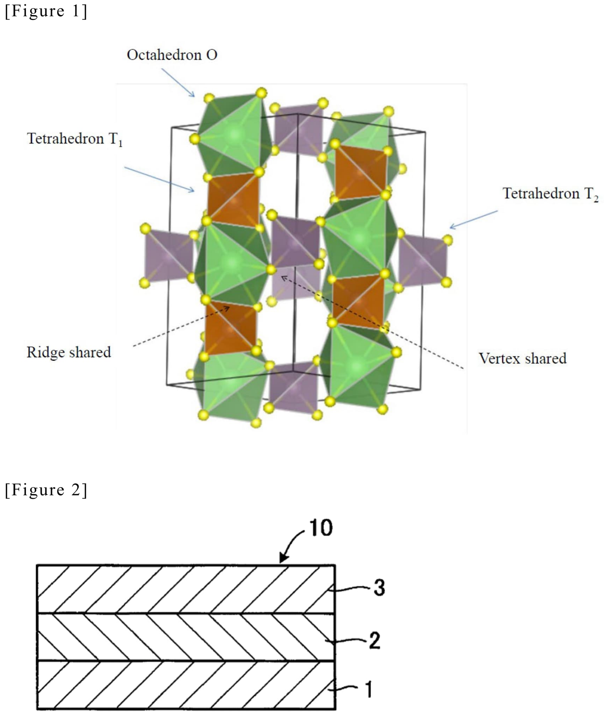

In a further embodiment, as shown in Figure 1, the present Sn-containing sulfide solid electrolyte preferably contains, as a main constituent, a crystal structure having an octahedron O composed of a Li element and a S element, a tetrahedron $T_1$ composed of one or more elements selected from the group consisting of P and Sn and a S element, and a tetrahedron $T_2$ composed of a P element and a S element, wherein the tetrahedron $T_1$ and the octahedron O share a ridge, and the tetrahedron $T_2$ and the octahedron O share a vertex. It is assumed that higher ionic conductivity can be obtained by allowing the crystal to have such a structure.

The Sn-containing sulfide solid electrolyte according to the present embodiment can be preferably used, for example, as a solid electrolyte material for lithium-ion secondary batteries. The Sn-containing sulfide solid electrolyte according to the present embodiment has a lithium ion conductivity (25°C) of preferably $8.0 \times 10^{-4}$ S/cm or more (e.g., $8.0 \times 10^{-4}$ to $3.0 \times 10^{-3}$ S/cm), more preferably $0.5 \times 10^{-3}$ S/cm or more (e.g., $0.5 \times 10^{-3}$ S/cm to $3.0 \times 10^{-3}$ S/cm), further preferably $1.0 \times 10^{-3}$ S/cm or more (e.g., $1.0 \times 10^{-3}$ to $3.0 \times 10^{-3}$ S/cm, $1.1 \times 10^{-3}$ to $3.0 \times 10^{-3}$ S/cm), and particularly preferably $1.5 \times 10^{-3}$ S/cm or more (e.g., $1.5 \times 10^{-3}$ to $3.0 \times 10^{-3}$ S/cm, $1.7 \times 10^{-3}$ to $3.0 \times 10^{-3}$ S/cm).

The composition of the Sn-containing sulfide solid electrolyte according to the present embodiment is not particularly limited, and examples thereof may include $Li_{3.27}Sn_{0.27}P_{0.73}S_4$, $Li_{3.33}Sn_{0.33}P_{0.67}S_4$, $Li_4SnS_4$, $Li_2SnS_3$, $Li_{10}SnP_2S_{12}$, $Li_{10}(Ge_{0.5}Sn_{0.5})P_2S_{12}$, $Li_{10}(Si_{0.5}Sn_{0.5})P_2S_{12}$, $Li_{3.45}[Sn_{0.09}Si_{0.36}]P_{0.55}S_4$, $Na_4SnS_4$, $Na_4SnS_4$, $Na_2SnS_3$, $Na_{10}SnP_2S_{12}$, $Na_{9.81}Sn_{0.81}P_{2.19}S_{12}$, $Na_{10}(Ge_{0.5}Sn_{0.5})P_2S_{12}$, $Na_{10}(Si_{0.5}Sn_{0.5})P_2S_{12}$, and $Na_{3.45}[Sn_{0.09}Si_{0.36}]P_{0.55}S_4$. Of these, $Li_{3.27}Sn_{0.27}P_{0.73}S_4$ and $Li_{3.33}Sn_{0.33}P_{0.67}S_4$ are preferable, and $Li_{3.27}Sn_{0.27}P_{0.73}S_4$ is particularly preferable.

3. All-solid-state battery

The above-mentioned Sn-containing sulfide solid electrolyte can be used, for example, in lithium-ion secondary batteries, and in particular, in all-solid-state lithium-ion secondary batteries. Therefore, according to a further embodiment of the present invention, an all-solid-state battery comprising the above-mentioned Sn-containing sulfide solid electrolyte is provided.

Herein, the "all-solid-state battery" means an all-solid-state lithium-ion secondary battery. Figure 2 is a schematic cross-sectional view of the all-solid-state battery according to one embodiment of the present invention. An all-solid-state battery 10 has a structure in which a solid electrolyte layer 2 is arranged between a positive electrode layer 1 and a negative electrode layer 3. The all-solid-state battery 10 can be used in various types of devices including, as representative examples, mobile phones, personal computers, automobiles, etc.

The Sn-containing sulfide solid electrolyte according to the embodiment of the present invention may be comprised as a solid electrolyte in any one or more layers of the positive electrode layer 1, the negative electrode layer 3, and the solid electrolyte layer 2. When the Sn-containing sulfide solid electrolyte according to the embodiment of the present invention comprised in the positive electrode layer 1 or the negative electrode layer 3, the Sn-containing sulfide solid electrolyte is used in combination with a positive electrode active material or a negative electrode active material for use in known lithium-ion secondary batteries. The amount ratio between the Sn-containing sulfide solid electrolyte and other materials comprised in the positive electrode layer 1 or the negative electrode layer 3 is not particularly limited.

When the Sn-containing sulfide solid electrolyte according to the embodiment of the present invention is comprised in the solid electrolyte layer 2, the solid electrolyte layer 2 may be composed of only the Sn-containing sulfide solid electrolyte according to the embodiment of the present invention, or may comprise the present Sn-containing sulfide solid electrolyte in appropriate combination with an oxide solid electrolyte (e.g., $Li_7La_3Zr_2O_{12}$), a sulfide-based solid electrolyte (e.g., $Li_2S-P_2S_5$), or other complex hydride solid electrolytes (e.g., $LiBH_4$ or $3LiBH_4$-LiI), etc., as necessary, and may be then used.

The all-solid-state battery is produced by molding the above-mentioned individual layers and laminating them on another. The method of molding individual layers and the lamination method are not particularly limited.

Examples of the methods may include: a method comprising dispersing a solid electrolyte and/or an electrode active material in a solvent to form a slurry, then applying the slurry by a doctor blade, spin coating, etc., and then rolling it to form a film; a vacuum evaporation method; an ion plating method; a sputtering method; a gas phase method, in which film formation and lamination are performed using a laser ablation method, etc.; and a pressure molding method, in which powder is molded by hot pressing, or cold pressing without applying heat, and is then laminated.

Since the Sn-containing sulfide solid electrolyte according to the present embodiment is relatively soft, it is particularly preferable to mold individual layers according to a pressure molding method and to laminate them on one another so as to produce an all-solid-state battery. There are two types of pressure molding methods, namely, hot pressing, which is performed with heating, and cold pressing, which is performed without heating. Even cold pressing can be used for molding, sufficiently.

Examples

Hereinafter, the present invention will be described in more detail in the following examples. However, these examples are not intended to limit the content of the present invention.

< Synthesis of $Li_{3.27}Sn_{0.27}P_{0.73}S_4$ >

(Example 1)

$Li_2S$ (manufactured by Sigma-Aldrich, purity: 99.8%), $P_2S_5$ (manufactured by Sigma-Aldrich, purity: 99%) and $SnS_2$ (manufactured by manufactured by JAPAN PURE CHEMICAL CO., LTD., purity: 99.9%) were used as raw materials. These raw materials were weighed in a glove box with an argon atmosphere, so that the stoichiometric ratio of $Li_{3.27}Sn_{0.27}P_{0.73}S_4$ was obtained, and were then mixed for 15 minutes using an agate mortar. Thereafter, 1.0 g of the obtained powder and 15 zirconia balls (manufactured by Nikkato Corporation "YTZ") with a diameter of $\varphi10$ mm were placed in a 45 mL zirconia pot, followed by hermetical sealing. This zirconia pot was fixed in a planetary ball mill device (manufactured by Fritsch Japan Co., Ltd.; P7) and a mechanical milling treatment was then performed at 600 rpm for 10 hours (gravity value: 27.5 G). After the mechanical milling treatment, the zirconia balls and the powder were separated from each other, using a stainless steel sieve with 2 mm openings, to obtain a solid electrolyte powder. The series of operations were performed in the glove box with an argon atmosphere.

It is to be noted that the gravity value was calculated by the following formula:

Gravity value (G) = 1118 $\times$ revolution radius (m) $\times$ rotation speed (rpm)$^2$ $\times$ 10$^{-6}$

Herein, the revolution radius means the distance from the edge of the pedestal of the planetary ball mill to the center of the fixed position of the zirconia pot, and in the Examples, a device with a revolution radius of 0.0682 m was used.

(Example 2)

A solid electrolyte powder was produced in the same manner as that of Example 1, with exception that the mechanical milling treatment was performed at 800 rpm for 10 hours (gravity value: 48.8 G).

(Example 3)

$Li_2S$ (manufactured by Sigma-Aldrich, purity: 99.8%), $P_2S_5$ (manufactured by Sigma-Aldrich, purity: 99%) and $SnS_2$ (manufactured by JAPAN PURE CHEMICAL CO., LTD., purity: 99.9%) were used as raw materials. These raw materials were weighed in a glove box with an argon atmosphere, so that the stoichiometric ratio of $Li_{3.27}Sn_{0.27}P_{0.73}S_4$ was obtained, and were then mixed for 15 minutes using an agate mortar. Thereafter, 1.0 g of the obtained powder, 15 zirconia balls (manufactured by Nikkato Corporation "YTZ") with a diameter of $\varphi$10 mm, and 8 mL of heptane (manufactured by Wako Pure Chemical Industries, Ltd., super dehydrated grade) were placed in a 45 mL zirconia pot, followed by hermetical sealing. This zirconia pot was fixed in a planetary ball mill device (manufactured by Fritsch Japan Co., Ltd.; P7) and a mechanical milling treatment was then performed at 600 rpm for 10 hours (gravity value: 27.5 G). After the mechanical milling treatment, the zirconia balls and the slurry were separated from each other, using a stainless steel sieve with 2 mm openings. The solvent was removed from the obtained slurry at 60°C under reduced pressure. After that, the resulting slurry was subjected to vacuum drying at 150°C for 1 hour to obtain a solid electrolyte powder. The series of operations were performed in the glove box with an argon atmosphere.

(Reference Example 1)

$Li_2S$ (manufactured by Sigma-Aldrich, purity: 99.8%), $P_2S_5$ (manufactured by Sigma-Aldrich, purity: 99%) and $SnS_2$ (manufactured by JAPAN PURE CHEMICAL CO., LTD., purity: 99.9%) were used as raw materials. These raw materials were weighed in a glove box with an argon atmosphere, so that the stoichiometric ratio of $Li_{3.27}Sn_{0.27}P_{0.73}S_4$ was obtained, and were then mixed for 15 minutes using an agate mortar. Thereafter, 1.0 g of the obtained powder and 15 zirconia balls (manufactured by Nikkato Corporation "YTZ") with a diameter of $\varphi$10 mm were placed in a 45 mL zirconia pot, followed by hermetical sealing. This zirconia pot was fixed in a planetary ball mill device (manufactured by Fritsch Japan Co., Ltd.; P7) and a mechanical milling treatment was then performed at 800 rpm for 10 hours. After the mechanical milling treatment, the zirconia balls and the powder were separated from each other, using a stainless steel sieve with 2 mm openings, to obtain a powder. The obtained powder was subjected to firing in an argon atmosphere at 475°C for 8 hours to obtain a solid electrolyte powder. The series of operations were performed in the glove box with an argon atmosphere.

< Measurement of lithium ion conductivity >

The solid electrolyte powders obtained in Examples 1 to 3 were each subjected to uniaxial molding (480 MPa) to obtain a disk with a thickness of approximately 1 mm and a diameter of 10 mm. Using an all-solid-state battery evaluation cell (manufactured by Hohsen Corp.), AC impedance measurement ("SI1260 IMPEDANCE/GAIN-PHASE ANALYZER" manufactured by Solartron) was performed at room temperature (25°C) by a four-terminal method to calculate the lithium ion conductivity.

Specifically, the samples were each placed in a thermostatic chamber set at 25°C and were then retained for 30 minutes, followed by measuring the lithium ion conductivity. The measurement frequency range was 0.1Hz to 1MHz, and the amplitude was 50mV. The results are shown in Table 1.

[Table 1]

| | | Composition | Mixing method | Mixing conditions | Gravity value (G) | Half value width | | Ionic conductivity (mS/cm) |
| --- | --- | --- | --- | --- | --- | --- | --- | --- |
| | | | | | | $2\theta = 19.83$ $\pm 0.50°$ | $2\theta = 29.07$ $\pm 0.50°$ | |
| Example 1 | | $Li_{3.27}S_{0.27}P_{0.73}S_4$ | Dry | 600 rpm, 10 h | 27.5 | 1.52° ($2\theta =$ 19.69°) | 1.13° ($2\theta =$ 29.07°) | 1.10 |
| Example 2 | | $Li_{3.27}S_{0.27}P_{0.73}S_4$ | Dry | 800 rpm, 10 h | 48.8 | 1.00° ($2\theta =$ 19.90°) | 0.90° ($2\theta =$ 29.12°) | 1.70 |

(continued)

| | Composition | Mixing method | Mixing conditions | Gravity value (G) | Half value width | | Ionic conductivity (mS/cm) |
| | | | | | $2\theta = 19.83 \pm 0.50°$ | $2\theta = 29.07 \pm 0.50°$ | |
|---|---|---|---|---|---|---|---|
| Example 3 | $Li_{3.27}Sn_{0.27}P_{0.73}S_4$ | Wet (heptane) | 600 rpm, 10 h | 27.5 | 1.45° ($2\theta = 19.66°$) | 1.12° ($2\theta = 29.07°$) | 0.81 |

< X-ray diffraction measurement >

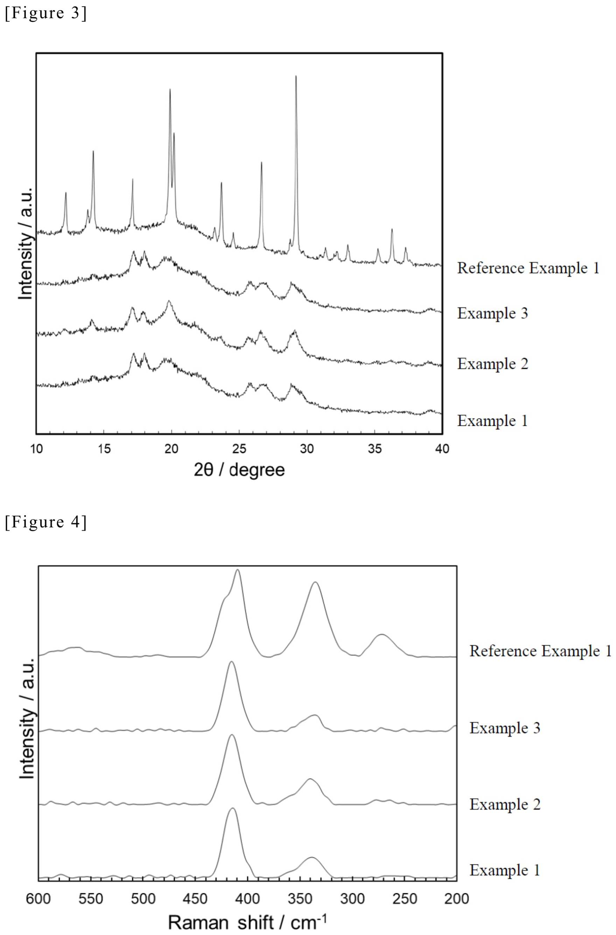

The solid electrolyte powders obtained in Examples 1 to 3 and Reference Example 1 were each subjected to X-ray diffraction measurement ("X'Pert3 Powder" manufactured by PANalytical; CuK$\alpha$: $\lambda$ = 1.5405Å) at room temperature (25°C) in an Ar atmosphere. The results of the X-ray diffraction measurement are shown in Figure 3.

Furthermore, based on the X-ray diffraction measurement results shown in Figure 3, the half value widths of the peak at $2\theta = 19.83° \pm 0.50°$ and the peak at $2\theta = 29.07° \pm 0.50°$ were calculated. The calculation method is as follows.

The diffraction data obtained by the above-described X-ray diffraction measurement was incorporated into the crystal structure analysis software SmartLab studio II, and background and peak fitting were performed. A split pseudo-Voigt function was selected for profile fitting, and each peak half value was automatically calculated.

It is found that the X-ray diffraction peaks of Examples 1 to 3 are different from the peak of Reference Example 1, which was subjected to a heating step after the mechanical milling treatment, and that the widths were wider.

< Raman spectroscopy >

(1) Sample preparation

Samples for Raman spectroscopy were prepared, using the solid electrolyte powders obtained in Examples 1 to 3 and Reference Example 1, and a hermetically sealed container having a quartz glass ($\varphi$60 mm, thickness: 1 mm) as an optical window on the upper portion. After the solid electrolyte powder was attached to the quartz glass in a glove box with an argon atmosphere, the container was then hermetically sealed and removed from the glove box, followed by performing Raman spectroscopy.

(2) Measurement conditions

The measurement was performed using a laser Raman spectrophotometer NRS-5100 (manufactured by JASCO Corporation) with an excitation wavelength of 532.15 nm and an exposure time of 10 to 15 seconds (Example 1: 10 seconds; Example 2: 12 seconds; Example 3: 15 seconds; and Reference Example 1: 15 seconds).

The results of the Raman spectroscopy are shown in Figure 4.

From the above results, it is found that, according to the methods of the Examples, a Sn-containing sulfide solid electrolyte with excellent ionic conductivity can be obtained without performing a heating step after the mechanical milling treatment.

Several embodiments of the present invention have been described. These embodiments are presented as examples and are not intended to limit the scope of the invention. These novel embodiments can be carried out in various other forms, and various omissions, replacements and modifications can be made in a range that does not depart from the gist of the invention. These embodiments and variations thereof are included in the scope and gist of the invention, and are also included in the scope of the inventions recited in the claims and the equivalents thereof.

Reference Signs List

1...Positive electrode layer, 2... Solid electrolyte layer, 3... Negative electrode layer, 10... All-solid-state battery.

**Claims**

1. A method for producing a Sn-containing sulfide solid electrolyte, comprising:

preparing a raw material mixture containing a Li element, a Sn element, a P element and a S element; and
subjecting the raw material mixture to a mechanical milling treatment to obtain a Sn-containing sulfide solid electrolyte, wherein
a heat treatment is not carried out after the mechanical milling treatment.

2. The method according to claim 1, wherein the Sn-containing sulfide solid electrolyte has a lithium ion conductivity of $8.0 \times 10^{-4}$ S/cm or more.

3. The method according to claim 1 or 2, wherein the Sn-containing sulfide solid electrolyte has a crystal phase with an orthorhombic structure.

4. The method according to any one of claims 1 to 3, wherein the Sn-containing sulfide solid electrolyte has diffraction peaks at, at least, $2\theta = 14.08°\pm0.50°$, $17.10°\pm0.50°$, $17.89°\pm0.50°$, $19.83°\pm0.50°$, $25.66°\pm0.50°$, $26.58°\pm0.50°$ and $29.07°\pm0.50°$ in X-ray diffraction (CuK$\alpha$: $\lambda$ = 1.5405Å).

5. The method according to any one of claims 1 to 4, wherein the Sn-containing sulfide solid electrolyte has peaks at, at least, $415\pm10$ cm$^{-1}$ and $340\pm10$ cm$^{-1}$ in Raman spectroscopy.

6. The production method according to any one of claims 1 to 5, wherein the Sn-containing sulfide solid electrolyte contains, as a main constituent, a crystal structure having an octahedron O composed of a Li element and a S element, a tetrahedron $T_1$ composed of one or more elements selected from the group consisting of P and Sn and a S element, and a tetrahedron $T_2$ composed of a P element and a S element, wherein the tetrahedron $T_1$ and the octahedron O share a ridge, and the tetrahedron $T_2$ and the octahedron O share a vertex.

7. The method according to any one of claims 1 to 6, wherein the mechanical milling is dry mechanical milling.

8. The method according to any one of claims 1 to 7, wherein the mechanical milling is wet mechanical milling.

9. The method according to claim 8, wherein the wet mechanical milling is carried out in the presence of a hydrocarbon solvent.

10. The method according to claim 9, wherein the hydrocarbon solvent is selected from the group consisting of heptane, hexane, toluene and xylene.

11.

   The method according to any one of claims 1 to 10, wherein
   the mechanical milling treatment is carried out under the condition of a gravity value of 27.5 G or more, using a planetary ball mill, and
   the gravity value is calculated according to the following equation:

   gravity value (G) = 1118 $\times$ revolution radius (m) $\times$ rotation speed (rpm)$^2$ $\times$ 10$^{-6}$.

12. A Sn-containing sulfide solid electrolyte, which contains a Li element, a Sn element, a P element and a S element, has a crystal phase with an orthorhombic structure, and has peaks at, at least, $2\theta = 14.08°\pm0.50°$, $17.10°\pm0.50°$, $17.89°\pm0.50°$, $19.83°\pm0.50°$, $25.66°\pm0.50°$, $26.58°\pm0.50°$ and $29.07°\pm0.50°$ in X-ray diffraction (CuK$\alpha$: $\lambda$ = 1.5405Å).

13. The Sn-containing sulfide solid electrolyte according to claim 12, which has a peak half value width of 0.80 to 1.70° at $2\theta = 19.83°\pm0.50°$ and a peak half value width of 0.70 to 1.40° at $2\theta = 29.07°\pm0.50°$ in X-ray diffraction (CuK$\alpha$: $\lambda$ = 1.5405 Å).

14. The Sn-containing sulfide solid electrolyte according to claim 12 or 13, which has a lithium ion conductivity of $8.0 \times 10^{-4}$ S/cm or more.

15. The Sn-containing sulfide solid electrolyte according to any one of claims 12 to 14, which has peaks at, at least, $415\pm10$ cm$^{-1}$ and $340\pm10$ cm$^{-1}$ in Raman spectroscopy.

**16.** The Sn-containing sulfide solid electrolyte according to any one of claims 12 to 15, which contains, as a main constituent, a crystal structure having an octahedron O composed of a Li element and a S element, a tetrahedron $T_1$ composed of one or more elements selected from the group consisting of P and Sn and a S element, and a tetrahedron $T_2$ composed of a P element and a S element, wherein the tetrahedron $T_1$ and the octahedron O share a ridge, and the tetrahedron $T_2$ and the octahedron O share a vertex.

**17.** An all-solid-state battery, comprising the Sn-containing sulfide solid electrolyte according to any one of claims 12 to 16.

[Figure 1]

Octahedron O

Tetrahedron $T_1$

Tetrahedron $T_2$

Ridge shared

Vertex shared

[Figure 2]

[Figure 3]

[Figure 4]

## INTERNATIONAL SEARCH REPORT

| International application No. |
| --- |
| **PCT/JP2024/010180** |

**A. CLASSIFICATION OF SUBJECT MATTER**

*H01B 13/00*(2006.01)i; *C01B 25/14*(2006.01)i; *H01B 1/06*(2006.01)i; *H01B 1/10*(2006.01)i; *H01M 10/052*(2010.01)i; *H01M 10/0562*(2010.01)i

FI:  H01B13/00 Z; H01M10/0562; H01M10/052; H01B1/06 A; H01B1/10; C01B25/14

According to International Patent Classification (IPC) or to both national classification and IPC

**B. FIELDS SEARCHED**

Minimum documentation searched (classification system followed by classification symbols)

H01B13/00; C01B25/14; H01B1/06; H01B1/10; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2022-139139 A (THE NATIONAL INSTITUTE OF ADVANCED INDUSTRIAL SCIENCE AND TECHNOLOGY) 26 September 2022 (2022-09-26) paragraphs [0026]-[0112], fig. 1-9 | 1-2, 5-6, 11 |
| Y | | 7-10 |
| A | | 3-4, 12-17 |
| X | WO 2018/096957 A1 (THE NATIONAL INSTITUTE OF ADVANCED INDUSTRIAL SCIENCE AND TECHNOLOGY) 31 May 2018 (2018-05-31) paragraphs [0015]-[0108], fig. 1-21 | 1 |
| A | | 2-17 |
| Y | JP 2015-72816 A (OSAKA PREFECTURE UNIV.) 16 April 2015 (2015-04-16) paragraphs [0017]-[0020] | 7-10 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 May 2024** | **28 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/010180**

| Patent document cited in search report | Publication date (day/month/year) | Patent family member(s) | Publication date (day/month/year) |
|---|---|---|---|
| JP 2022-139139 A | 26 September 2022 | (Family: none) | |
| WO 2018/096957 A1 | 31 May 2018 | (Family: none) | |
| JP 2015-72816 A | 16 April 2015 | (Family: none) | |

Form PCT/ISA/210 (patent family annex) (July 2022)

REFERENCES CITED IN THE DESCRIPTION

**Patent documents cited in the description**

- JP 2022139139 A
- JP 2008000459 A

**Non-patent literature cited in the description**

- *Journal of Power Sources*, 2018, vol. 396, 824-830
- *Journal of Energy Chemistry*, 2020, vol. 41, 171-176
- *Energy Environ. Sci.*, 2014, vol. 7, 1053-1058
- *Ceramics International*, 2021, vol. 47, 28377-28383